# EUROPÄISCHE PATENTSCHRIFT

(11) **EP 2 250 880 B1**
(45) Veröffentlichungstag und Bekanntmachung des Hinweises auf die Patenterteilung: **09.10.2013**
(21) Anmeldenummer: 10450080.6
(22) Anmeldetag: 10.05.2010
(51) Int. Cl.: A01K 51/00

(54) **Vorrichtung zum Bekämpfen von bienenschädlichen Milben**
Device for controlling mites which are harmful to bees
Dispositif destiné à lutter contre les acariens attaquant les abeilles

(30) Priorität: 11.05.2009 AT 7152009
(43) Veröffentlichungstag der Anmeldung: 17.11.2010
(73) Patentinhaber: Ecodesign Company Engineering & Management Consultancy GmbH, 1070 Wien (AT)
(72) Erfinder: Wimmer, Wolfgang, Dr., 1140 Wien (AT)
(74) Vertreter: Patentanwaltskanzlei Matschnig & Forsthuber OG

(56) Entgegenhaltungen:
- DE-A1- 3 830 802
- DE-A1- 19 831 912
- DE-U1- 9 210 779
- US-A1- 2008 064 298

## Beschreibung

Die vorliegende Erfindung betrifft eine Vorrichtung zum Bekämpfen von bienenschädlichen Milben durch Wärmeeinwirkung mittels Zuführen eines Warmluftstroms in ein Brutzellen enthaltendes Behältnis, wobei die Vorrichtung eine Wärmequelle und eine Luftführung zum Erzeugen des Warmluftstroms aufweist und der Vorrichtung eine Temperaturregeleinrichtung zum Regeln der Lufttemperatur des Warmluftstroms mit zumindest einem Temperaturmessmittel zugeordnet ist.

Bienenschädliche Milben, wie jene der Gattung *Varroa* oder *Tropilaelaps,* sind eines der größten Probleme in der Bienenzucht. Die Varroamilbe gibt es seit ca. 1986 in Europa - eingeschleppt aus Asien. Grundsätzlich weist mittlerweile jedes Bienenvolk Varroamilben auf. Entscheidend ist jedoch die Anzahl der Milben im Bienenstock - überschreitet die Anzahl einen kritischen Wert spricht man von Varroatose. Diese ist eine der gefährlichsten Krankheiten von Bienenvölkern, die unweigerlich zum Zusammenbruch der Bienenpopulation führt, wenn nicht dagegen behandelt wird. Mit zunehmendem Befallsgrad kommt es zur Mehrfachparasitierung der Brutzellen - es dringen zwei und mehr befruchtete Weibchen in die Brutzellen ein was den Anteil der stark geschädigten Jungbienen (verstümmelte Flügel, verkrüppelter Hinterleib) ansteigen lässt. Bei starkem Befall können durch vernachlässigte Brutpflege weitere Brutkrankheiten auftreten. Wenige Tage später bricht das Bienenvolk zusammen. Für die Imkerei ist eine gesunde und ungeschädigte Bienenbrut sehr wichtig.

Eine zusätzliche Herausforderung bereiten in diesem Zusammenhang überdurchschnittlich warme Wintermonate, in denen es nicht zu üblichen Brutpause in den Bienenstöcken kommt. Mit der Brutpause geht auch eine Vermehrungspause bei den Milben einher. Fehlt diese Vermehrungspause, erreicht die Milbenpopulation im Bienenstock bereits in den Monaten Mai oder Juni den kritischen Befallsgrad und eine Behandlung mit konventionellen Methoden ist sehr schwierig bzw. nur dann möglich, wenn der Honig nicht entnommen wird.

Zum Bekämpfen des Milbenbefalls wird von den Imkern ein breites Spektrum an Methoden angewendet. Die Bekämpfungsmaßnahmen haben insbesondere ein Abtöten der Milben zum Ziel. Viele dieser Methoden sind chemischer Natur und haben den Nachteil, dass sich problematische oder bleibende Rückstände in Honig, Wachs oder Pollen anreichern können. Daher sind diese ausschließlich erst nach der letzten Honigernte bzw. in der brutfreien Zeit anwendbar. Dies hat wiederum den Nachteil, dass das Bienenvolk geschwächt in das Herbst-/ Winterhalbjahr geht. Darüber hinaus gestaltet sich die Dosierung der chemischen Verbindungen oft als schwierig. Weiters erfordert ihre Anwendung Vorsichtsmaßnahmen. In der Vergangenheit kam es auch zu Resistenzbildung der Milben gegen diverse chemische Verbindungen, z.B. gegen ein lange eingesetztes Pestizid auf Basis eines synthetischen Pyrethroids. Bei falscher Dosierung, z.B. der Oxalsäure, kann es weiters zu einer Beeinträchtigung der Bienen kommen.

Es besteht daher ein Bedarf nach einem Verfahren zum Bekämpfen von Milbenbefall, welches jederzeit und insbesondere auch vor der Honigernte eingesetzt werden kann. Insbesondere besteht ein Bedarf nach einem Verfahren, das zum Bekämpfen der Milben in verdeckelten Brutzellen geeignet ist, da es sich bei den Milben in der Bienenbrut um die befruchteten Weibchen handelt und ein Schädigen bzw. Abtöten derselben eine nachhaltige Unterbrechung des Reproduktionszyklus bewirkt. Die Vermehrungsgeschwindigkeit der Milben wird dadurch deutlich reduziert.

Da sich die Milben zum Großteil in der Drohnenbrut ansiedeln, besteht eine derartige Methode darin, die Drohnenbrut zu entnehmen. Ein effektives Bekämpfen des Milbenbefalls ist damit jedoch nicht möglich.

Aus der WO 92/14355 ist ein Verfahren bzw. eine Vorrichtung der eingangs genannten Art bekannt geworden, die ein Bekämpfen bienenschädlicher Milben vor der Honigernte mit kontrolliert erwärmter Luft definierter relativer Luftfeuchtigkeit ermöglichen. Insbesondere offenbart die WO 92/14355 ein Verfahren bzw. eine Vorrichtung zum Bekämpfen von Varroa-Milben, die sich in Bienenbrut enthaltenden Brutwaben mit einem Rahmen und verdeckelten Brutzellen befinden. Die gezeigte Vorrichtung bzw. das gezeigte Verfahren haben jedoch den Nachteil, dass ein unabhängiges, verschließbares Behältnis (Wärmeschrank) mit hohem Platzverbrauch und Gewicht notwendig ist, in welches die Brutwabenrähmchen eingehängt werden. Die Vorrichtung ist sehr teuer und nicht über weitere Strecken transportierbar. Dies ist besonders nachteilig, wenn Bienenvölker zur Behandlung an verschiedenen Standorten angefahren werden müssen. Weiters ist das der WO 92/14355 zugrunde liegende Verfahren relativ langwierig.

Eine weitere Vorrichtung zum Bekämpfen von Milben in der Bienenbrut ist in der DE 38 30 802 A1 gezeigt. DE 92 10 779 U1 beschreibt ein Gerät zur Wärmebehandlung in der Imkerei mit den Merkmalen des Oberbegriffs des Anspruchs 1.

Die DE 36 43 872 A1 beschreibt eine Vorrichtung bzw. ein Verfahren zum Bekämpfen von auf Bienen sitzenden Milben mittels eines Heißluftstroms, wobei die Milben von den Bienen abfallen und auf einer klebrigen Oberfläche haften bleiben. Mit diesem Verfahren werden jedoch nur die den Bienen ansitzenden Milben bekämpft. Die DE 198 34 345 A offenbart ein Verfahren und eine Vorrichtung zum Trennen von Varroa-Milben von in einem Bienenkasten befindlichen Bienen mittels Luft mit einer sehr geringen relativen Feuchte. Ein weiteres Trennverfahren für Bienen von Kleinlebewesen wie Milben und eine entsprechende Vorrichtung sind in der DE 103 40 308 A1 offenbart. Die oben genannten Vorrichtungen und Verfahren sind jedoch nicht für das Bekämpfen von in den Brutzellen befindlichen Milben geeignet.

Es ist eine Aufgabe der Erfindung, eine Vorrichtung bereitzustellen, welche zum Durchführen eines verbesserten und kontrollierbaren Verfahrens zum Bekämpfen von in Brutzellen befindlichen Milben geeignet ist, mit welchem die Milben effektiv bekämpft, insbesondere abgetötet, werden, aber die Bienenbrut nicht geschädigt wird. Darüber hinaus soll die Vorrichtung kostengünstig in der Herstellung und im Betrieb, praktikabel in der Anwendung und insbesondere leicht zu transportieren sein.

Diese Aufgabe wird mit einer Vorrichtung der eingangs genannten Art gelöst, welche erfindungsgemäß eine Befeuchtungseinrichtung zum Befeuchten des Warmluftstroms aufweist, und wobei das zumindest eine Temperaturmessmittel zum Messen der Brutzellentemperatur eingerichtet ist, wobei ein der Brutzellentemperatur entsprechendes Signal der Temperaturregeleinrichtung zugeführt ist, welche die Brutzellentemperatur über die Lufttemperatur des Warmluftstroms auf einen vorgebbaren Wert regelt.

Mit Vorteil wird die erfindungsgemäße Vorrichtung in einem Verfahren eingesetzt, welches die folgenden, an einer aus einem Bienenstock entnommenen und von ansitzenden Bienen befreiten Brutwabe mit Brutzellen ausgeführten Schritte umfasst:
- Erwärmen der entnommenen Brutwabe mittels des regelbaren Warmluftstroms, wobei der Warmluftstrom befeuchtet wird und die relative Luftfeuchtigkeit des so befeuchteten Warmluftstroms zumindest 70%beträgt, und wobei die Brutzellen bis zum Erreichen einer Brutzellentemperatur, welche 39 bis 42°C beträgt, erwärmt werden, und
- Halten der Brutzellentemperatur für einen vorgebbaren Zeitraum.

Anschließend können die so behandelten Brutwaben in den Bienenstock zurückgestellt werden.

Dank der erfindungsgemäßen Vorrichtung können die in der Bienenbrut befindlichen Milben effektiv bekämpft und der Reproduktionszyklus der Milben nachhaltig unterbrochen werden. Unter dem Begriff "Bekämpfen" ist insbesondere das dauerhafte Schädigen und Abtöten der Milben zu verstehen. Die einwirkende Warmluft bewirkt eine Temperaturerhöhung der Brutzellen mit der Bienenbrut und folglich auch eine Temperaturerhöhung der in der Bienenbrut befindlichen Milben. Letztere werden durch das Halten der Brutzellentemperatur zwischen 39 bis 42°C dauerhaft geschädigt bzw. abgetötet. Gleichzeitig wird die Bienenbrut durch das Verfahren nicht beeinträchtigt. Wesentlich dabei ist eine relative Luftfeuchtigkeit von zumindest 70%. Die abgetöteten Milben fallen über einen Zeitraum von üblicherweise maximal 12 Tagen ab und fallen weiters, wenn die Jungbienen schlüpfen, aus den Brutzellen heraus bzw. werden sie von den Stockbienen beim Reinigen der Brutzellen ausgetragen.

Durch die Messung und Regulierung der Temperatur in der Brutzelle, also an dem Ort, an dem sich die Milben befinden, kann die Bekämpfung der Milben zielgerichteter und kontrollierbarer als mit den bekannten Vorrichtungen bzw. Verfahren durchgeführt werden. Es existiert nur ein sehr schmales Temperaturband zwischen der für die Milben tödlichen Brutzellentemperatur und der Temperatur, die auch die Bienenbrut schädigen würde. Daher ist es von großem Vorteil, die Temperatur unmittelbar in der Brutzelle zu messen und zu regeln. Auf diese Weise kann einer möglichen Überhitzung der Brut durch eine kontrollierte Messung der Brutzellentemperatur entgegengewirkt werden.

Der Begriff "Brutzellen enthaltendes Behältnis" bezieht sich insbesondere auf eine Zarge. Der Begriff "Zarge" bzw. "Bienenzarge" ist dem einschlägigen Fachmann bekannt. Eine Zarge ist üblicherweise als eine kistenförmige Behausung (aus Holz oder Kunststoff) für Bienen ausgebildet. Das Rähmchen mit der Brutwabe wird in die Zarge eingehängt. Die Brutwabe, unter welcher ein von Honigbienen errichtetes Wabengebilde aus Wachs zu verstehen ist, enthält Brutzellen (im Wesentlichen sechseckige Waben) mit der Bienenbrut. Das "Brutzellen enthaltende Behältnis" kann jedoch jedes andere Behältnis sein, in welchem Brutwaben bzw. Rähmchen mit Brutwaben zum Zwecke der Durchführung des Verfahrens angeordnet werden können.

Bei einem Milbenbefall dringen die parasitären Milben vor dem Verdeckeln der Brutzellen in diese ein und schädigen die sich in den Brutzellen entwickelnden Larven bzw. Jungbienen.

Bei den bienenschädlichen Milben handelt es sich insbesondere um Milben der Gattung *Varroa* oder *Tropilaelaps.* Das Verfahren wird insbesondere bei bienenschädlichen Milben angewendet, welche sich in Bienenbrut enthaltenden, verdeckelten Brutzellen befinden. Bei der Bienenbrut kann es sich sowohl um Arbeiterinnenbrut als auch um Drohnenbrut handeln.

Günstigerweise werden nur die vollverdeckelten Brutwaben behandelt. Die auf den Brutwaben ansitzenden adulten Bienen werden vor dem Erwärmen der Brutwaben von diesen entfernt. Hierfür werden die Brutwaben aus dem Bienenstock entnommen und die darauf befindlichen Bienen händisch abgestreift, abgestoßen oder abgekehrt. Die bienenfreien Brutwaben werden anschließend zum Bekämpfen des Milbenbefalls in ein Behältnis, insbesondere in eine Zarge für einen Bienenstock, eingehängt. Nach der Wärmebehandlung werden die Brutwaben wieder in den Bienenstock zurückgestellt.

Zum Messen der Brutzellentemperatur ist es günstig, wenn das Temperaturmessmittel in unmittelbaren Kontakt mit der Brutzelle gebracht wird. Zum Erwärmen der Brutzellen und zur Regulierung der Brutzellentemperatur wird die Lufttemperatur des Warmluftstroms in Abhängigkeit der gemessenen Brutzellentemperatur geregelt und eingestellt. Die Regulierung erfolgt mittels der Temperaturregeleinrichtung. Vorteilhafterweise ist das Temperaturmessmittel dazu eingerichtet, die Brutzellentemperatur mit einer Messgenauigkeit von +/- 0,1°C zu messen. Temperaturmessmittel dieser Art sind dem einschlägigen Fachmann bekannt. Um die Brutzellentemperatur an verschiedenen Positionen zu messen, können mehrere redundante Temperaturmessmittel eingesetzt werden. Die Messung erfolgt zweckmäßigerweise in oder an zumindest einer der Brutzellen.

Bei einer bevorzugten Ausführungsform ragt das Temperaturmessmittel in zumindest eine der Brutzellen hinein. Dies hat den Vorteil einer sehr genauen Temperaturerfassung. Einige wenige Brutzellen können dabei zerstört werden, wenn das Temperaturmessmittel durch die Verdeckelung hindurchgestochen wird. Das Temperaturmessmittel ist zweckmäßigerweise stabförmig gestaltet, wobei die Spitze in eine Brutzelle hineinragt. Die Spitze ist dabei so dimensioniert, dass diese die Temperatur in der Brutzelle genau erfasst.

Bei einer weiteren vorteilhaften Ausführungsform ist das Temperaturmessmittel an einer von außen zugänglichen, vorzugsweise verdeckelten, Oberfläche einer Brutzelle angeordnet. Bei dieser Ausführungsform wird das Temperaturmessmittel an die vorzugsweise verdeckelte Oberfläche der Brutzelle aufgelegt, ohne in das Innere der Brutzelle einzudringen. Um einen Wärmeübergang von der Umgebungsluft auf das Temperaturmessmittel und ein Verfälschen des Messergebnisses zu verhindern, kann das Temperaturmessmittel zur Umgebungsluft hin isoliert sein.

In der Praxis hat sich gezeigt, dass die Milben besonders effektiv abgetötet werden, wenn die Brutzellentemperatur für zumindest 45 Minuten gehalten wird.

Es hat sich weiters gezeigt, dass eine Brutzellentemperatur von 39 bis 41,3 und insbesondere eine Brutzellentemperatur von 39 bis 40,5°C besonders schonend für die Bienenbrut ist und gleichzeitig die bienenschädlichen Milben effektiv abgetötet werden.

Darüber hinaus ist es vorteilhaft, wenn die Geschwindigkeit des Erwärmens der Brutzellen nicht mehr als 0,1 °C/Minute beträgt. Dadurch wird einerseits ein gleichmäßiges Durchwärmen der Brutzellen erreicht und andererseits die Bienenbrut durch Vermeiden großer Temperatursprünge geschont.

Ferner ist es aus den zuvor genannten Gründen von Vorteil, wenn das Erwärmen der Brutzellen sich über einen Zeitraum von zumindest 60 Minuten erstreckt.

Weiters ist es zweckmäßig, wenn vor dem Erwärmen der Brutzellen die Brutzellentemperatur für mindestens 20 Minuten auf einer Brutzellentemperatur von 32-33°C gehalten wird. Durch diese Vorbereitungsphase lässt sich das Verfahren sehr kontrolliert durchführen. Die Temperatur in den Brutzellen beträgt im Bienenstock üblicherweise 32-33°C. Die Umgebungstemperatur außerhalb der Brutzellen im Bienenstock liegt etwas höher; üblicherweise bei 35-36°C.

Der Erfinder konnte in seinen Versuchen weiters feststellen, dass die Effizienz der Bekämpfung des Milbenbefalls besonders groß ist, wenn die relative Luftfeuchtigkeit des Warmluftstroms zumindest 75% und vorzugsweise 80% +/- 2% beträgt. Grundsätzlich ist es günstig, wenn die relative Luftfeuchtigkeit zu jedem Zeitpunkt des Verfahrens zumindest 70% beträgt.

Die Befeuchtungseinrichtung kann bei einer ersten Variante ein Verdunstungselement aus einem saugfähigen Material umfassen, insbesondere ein Textilmaterial mit großer Oberfläche, welches zuvor mit Wasser getränkt wurde. Zweckmäßigerweise ist das Wasser in mikrobiologischer Hinsicht einwandfrei und kann beispielsweise Trinkwasser bzw. Leitungswasser aus der öffentlichen Wasserversorgung oder destilliertes Wasser sein.

Bei einer weiteren Variante kann die Befeuchtungseinrichtung eine, ein Aerosol bildende Vorrichtung umfassen, beispielsweise einen Ultraschallzerstäuber oder eine Druckpumpe mit Sprühdüse. Besonders bevorzugt umfasst die Befeuchtungseinrichtung einen Ultraschallzerstäuber. Der Nachteil eines Ultraschallzerstäubers gegenüber dem oben genannten Verdunstungselement sind die höheren Kosten. Ein Ultraschallzerstäuber hat jedoch den Vorteil einer Regulierbarkeit und Einstellung der relativen Luftfeuchtigkeit.

Die beiden oben genannten Varianten der Befeuchtungseinrichtung können alternativ oder zeitgleich verwendet werden.

Zum Steuern der relativen Luftfeuchtigkeit des Warmluftstromes kann die Vorrichtung eine Feuchtigkeitsregeleinrichtung zum Regeln des Befeuchtens durch das Befeuchtungsmittel aufweisen, wobei die Feuchtigkeitsregeleinrichtung ein Feuchtigkeitsmessmittel zum Messen der relativen Luftfeuchtigkeit des Warmluftstroms aufweist. Vorteilhafterweise ist das Feuchtigkeitsmessmittel dazu eingerichtet, die relative Luftfeuchtigkeit mit einer Messgenauigkeit von +/- 3%, vorzugsweise +/- 2%, zu messen. Feuchtigkeitsmessmittel dieser Art sind dem einschlägigen Fachmann bekannt.

Als Wärmequelle können aus dem Stand der Technik bekannte Wärmequellen wie Heizstrahler, Heizregister oder Wärme abstrahlende Lichtquellen, z.B. Glühbirnen, verwendet werden. Als besonders vorteilhaft hat sich ein Halogenstrahler als Wärmequelle erwiesen. Mit einem Halogenstrahler kann die Warmlufttemperatur und damit auch die Brutzellentemperatur wesentlich besser und mit hoher Genauigkeit reguliert werden, da dieser nach dem Abschalten rasch erkaltet, während andere Wärmequellen wie Heizstrahler auch nach dem Abschalten noch über einen längeren Zeitraum hinweg Wärme abgeben. Ein weiterer Vorteil eines Halogenstrahlers liegt darin, dass er sehr energieeffizient funktioniert und bei fehlendem Anschluss an das Stromnetz, wie es bei vielen Bienenstockstandorten (z.B. Wald) der Fall ist, für seinen Betrieb bereits ein Energiespeicher, z.B. eine Autobatterie, in Kombination mit einem konventionellen Spannungswandler genügt.

Die Luftführung zur Zwangsführung der erwärmten und befeuchteten Warmluft ist üblicherweise ein Ventilator oder ein Gebläse. Der Volumenstrom des Ventilators bzw. des Gebläse kann bei einer Variante variiert und angepasst werden.

Damit die Vorrichtung leicht und transportabel ist, sind die einzelnen Bauteile raumsparend angeordnet und aus leichten Materialien gefertigt. Zweckmäßigerweise ist die Vorrichtung so konzipiert, dass sie in eine gängige Bienenzarge hineinpasst, ohne dass die Bienenzarge verändert oder beschädigt wird. Gängige Maße für Bienenzargen sind beispielsweise Zander, Breitwabe oder Einheitsmaß. Dies ermöglicht dem Anwender, vor Ort üblicherweise vorhandene Bienenzargen zur Behandlung der bienenschädlichen Milben zu nutzen und erspart daher die teure Anschaffung eines eigenen Behandlungsgeräts (z.B. eines Wärmeschrankes) und den umständlichen Transport eines solchen Behandlungsgerätes zu den Bienenstöcken.

Bei einer vorteilhaften Ausführungsform weist die Vorrichtung eine Komponente auf, die nach Art eines Rähmchens in eine Zarge einhängbar ist und die die Wärmequelle, die Luftführung und die Befeuchtungseinrichtung beinhaltet. Dabei ist es besonders zweckmäßig, wenn die Komponente unter einer Brutzellen enthaltenden Bienenzarge angeordnet ist.

Bei einer Untervariante ist die oben genannte vorteilhafte Ausführungsform in einem Bienenzargenturm angeordnet. Der Bienenzargenturm ist aus zumindest zwei übereinander angeordneten Zargen zusammengesetzt, wobei dieser Bienenzargenturm zumindest eine untere Zargen mit einer Vorrichtung gemäß der vorteilhaften Ausführungsform sowie zumindest eine oberhalb dieser zumindest einen unteren Zarge angeordnete Bienenzarge mit Brutzellen eines Bienenvolkes aufweist, wobei sich zwischen den genannten Zargen zumindest eine Luftdurchtrittsöffnung zum Durchtreten des erzeugten Warmluftstroms befindet, und wobei sich das zumindest eine Temperaturmessmittel zu der in der Bienenzarge angeordneten Brutzelle erstreckt. Die Temperaturregeleinrichtung befindet sich bei der Ausführungsform und ihrer Untervariante außerhalb der Zarge bzw. des Zargenturms und ist mit der Komponente über eine Signalverbindung bzw. ein Kabel verbunden. Die Signalverbindungen können durch Direktverbindungen oder drahtlos realisiert sein. Dies hat den Vorteil, dass die Temperaturregeleinrichtung leicht zugänglich ist, z.B. für das manuelle Eingeben des Temperaturverlaufs oder, wenn die Temperaturegeleinrichtung ein Display aufweist, für das Ablesen der Temperatur. Die Temperaturregeleinrichtung kann auch gleichzeitig eine zusätzliche Funktion für die Regelung der relativen Luftfeuchtigkeit haben.

Bei einer bevorzugten Realisierung ist die Vorrichtung in zwei übereinander angeordneten unteren Zargen angeordnet.

Der Bienenzargenturm kann beispielsweise vierstöckig konzipiert sein, wobei vier Zargen übereinander gestapelt sind, wobei in den untersten zwei Zargen die Komponente der Vorrichtung nach Art eines Rähmchens und in den beiden oberen Zargen die vorher von den Bienen befreiten (z.B. durch Abstreifen der Bienen) Rähmchen mit den Brutzellen eingehängt sind. Mit dieser vierstöckigen Anordnung können bis zu zehn von Milben befallene Bienenbrutwaben in einem Durchgang behandelt werden.

Die erfindungsgemäße Vorrichtung ist für die Bekämpfung des Milbenbefalls der Bienenbrut gedacht. Dies schließt jedoch nicht aus, dass die Vorrichtung auch für andere Zwecke, beispielsweise für die Königinnenzucht oder zur Honigverarbeitung (z.B. für das Verflüssigen von kristallisiertem Honig), verwendet werden kann.

Die Erfindung samt ihren weiteren Vorzügen ist in dem folgenden, nicht einschränkenden Beispiel näher erläutert, das in den beigefügten Zeichnungen dargestellt ist. Die Zeichnungen zeigen:
- Fig. 1A: eine erfindungsgemäße, in eine Bienenzarge einhängbare Vorrichtung in Vorderansicht,
- Fig. 1B: die Vorrichtung der Fig.1A in Seitenansicht,
- Fig. 2: einen Bienenzargenturm mit der Vorrichtung aus Fig. 1A und Fig. 1B mit applizierten Temperatur- und Feuchtigkeitsmessmitteln und einer über Signalleitungen verbundenen Regeleinrichtung,
- Fig. 3: Detailansicht der Messung der Brutzellentemperatur mit einem Temperaturmessmittel,
- Fig. 4: ein Blockschaltbild der Temperaturregelung, und
- Fig. 5: den Verlauf der Brutzellentemperatur.

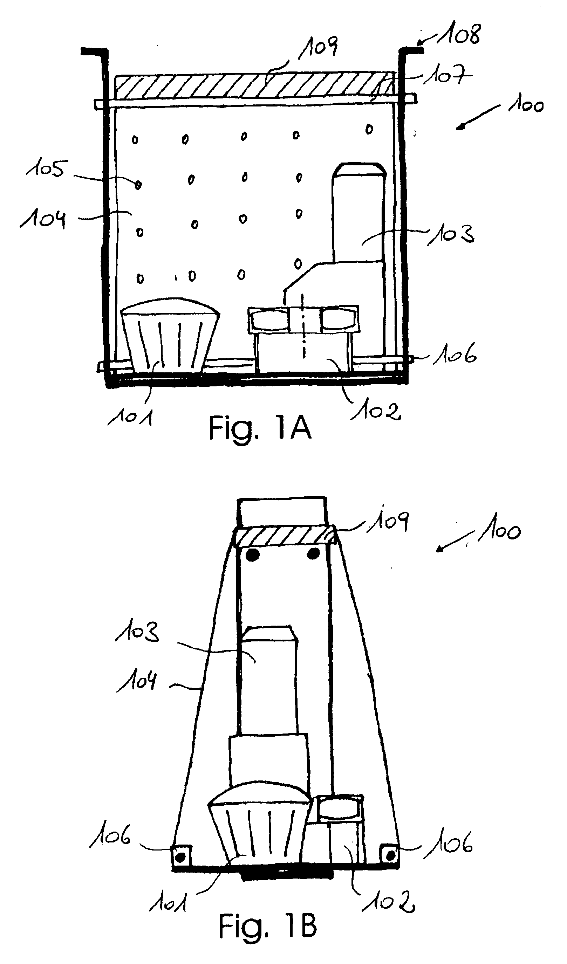

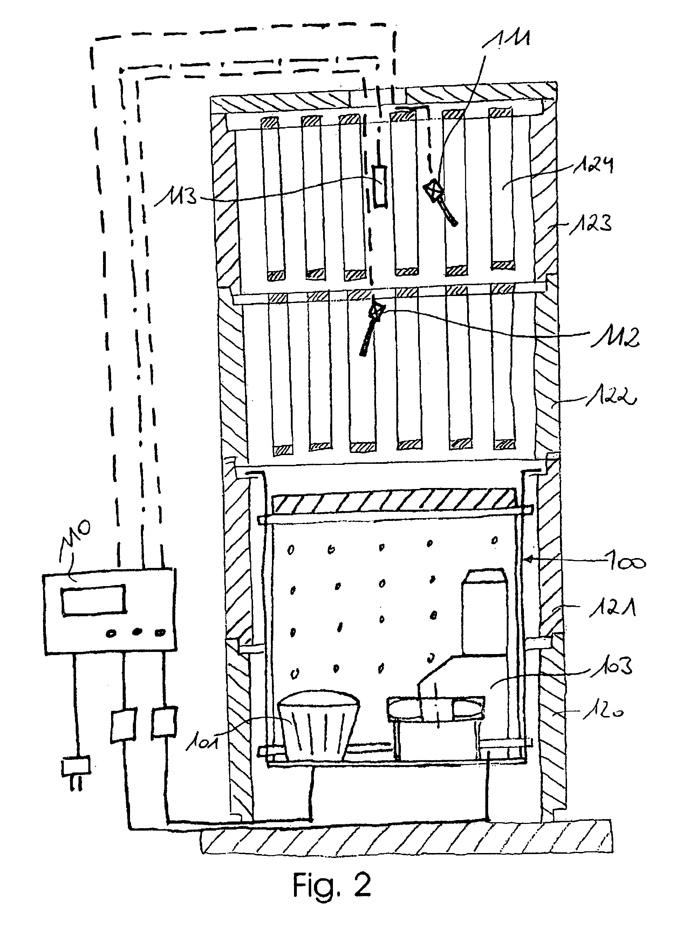

Fig. 1A und 1B zeigen eine Vorrichtung 100 gemäß der Erfindung. Zum Erzeugen eines Warmluftstroms weist die Vorrichtung eine Wärmequelle 101, hier einen Halogenstrahler, sowie einen Ventilator 102 als Luftführung auf. Zum Befeuchten der Warmluft ist in der Vorrichtung 100 ein mit Wasser getränkter Textilstoff 104 dachförmig über die Wärmequelle 101 und den Ventilator 102 gespannt, wobei der Textilstoff 104 zum Durchtritt der Warmluft Löcher 105 aufweist. Der Textilstoff 104 umfasst einen Schaumstoff 109 und ist über eine obere Haltestange 107 gelegt und auf zwei unteren Haltestangen 106 nach unten gespannt. Weiters ist in der Vorrichtung 100 als zusätzliche Befeuchtungseinrichtung ein Ultraschallzerstäuber 103 angeordnet. Der Textilstoff 104 sorgt für die Grundfeuchte und der Ultraschallzerstäuber 103 sorgt für den regelbaren Anteil an der relativen Luftfeuchte. Die genannten Vorrichtungselemente sind auf einer rähmchenartigen Halterung 108 angeordnet und können auf diese Art und Weise in eine gängige Zarge eingehängt werden. Weiters ist der Vorrichtung 100 eine Regeleinrichtung 110 mit zwei Temperatursensoren 111 und 112 sowie einem Feuchtigkeitssensor 113 zugeordnet, welche in Fig. 1A und 1B nicht dargestellt sind. Der Ist-Wert für die relative Luftfeuchtigkeit wird über den Feuchtigkeitssensor 113 aufgenommen. Diese in Fig. 1A und Fig. 1B nicht gezeigten Vorrichtungselemente sind in Fig. 2 dargestellt.

Die Fig. 2 zeigt einen vierstöckigen Bienenzargenturm mit einer erfindungsgemäßen Vorrichtung 100, wobei auch die applizierten Temperatur- und Feuchtigkeitsmessmittel und eine über Signalleitungen verbundene Regeleinrichtung 110 gezeigt sind. Die Vorrichtung 100 erstreckt sich dabei im Wesentlichen über zwei übereinander angeordnete untere Zargen 120, 121, während in den beiden oberen Zargen 122, 123 die Rähmchen 124 mit den Brutzellen enthaltenden Waben eingehängt sind. Die gezeigten Zargen 120, 121, 122, 123 sind übliche, in der Bienenzucht verwendete und dem einschlägigen Fachmann bekannte Bienenzargen.

Wie in der Fig. 2 ersichtlich ist, befindet sich die Temperatur- und Feuchtigkeitsregeleinrichtung 110 nicht innerhalb der Zargen, sondern außerhalb und ist mit der Wärmequelle 101 sowie dem Ultraschallzerstäuber 103 über eine geregelte Stromversorgung (durchgehende Verbindungslinien) verbunden. Von der Regeleinrichtung 110 erstrecken sich die Temperatursensoren 111, 112 über Signalverbindungen (gestrichelte Linien) zu den Brutzellen in den Rähmchen 124. Weiters ist die Regeleinrichtung mit dem Feuchtigkeitssensor 113 über eine Signalverbindung (Strich-Punkt-Linie) verbunden, wobei der Feuchtigkeitssensor 113 die relative Feuchtigkeit der Umgebungsluft zwischen den Rähmchen 124 misst. Der Ventilator 102 ist im gezeigten Beispiel nicht geregelt und läuft permanent. Die Signalverbindungen können durch Direktverbindungen oder drahtlos realisiert sein.

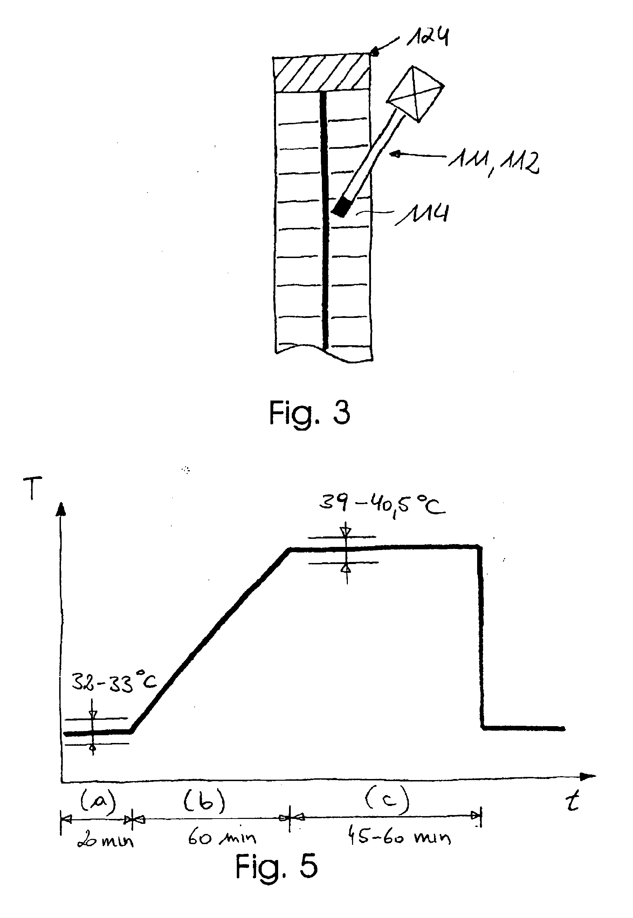

Die Fig. 3 zeigt eine Detailansicht eines der Temperatursensoren 111, 112, wobei sich der Temperatursensor 111, 112 in eine Brutzelle 114 hinein erstreckt und direkt in der Brutzelle 114 die Temperatur misst. Der Temperatursensor 111, 112 weist eine sehr genaue Temperaturmesswertaufnahme auf und ist mit einer Signalleitung mit der Regeleinrichtung verbunden. Zur Absicherung der Genauigkeit der Messung und Vermeindung von Messfehlem werden zumindest zwei Temperatursensoren verwendet.

Die Regeleinrichtung 110 regelt über die Temperatursensoren 111, 112 den Halogenstrahler 101. Aus den von den Temperatursensoren 111, 112 erhaltenen Messwerten wird ein Mittelwert als Ist-Wert für die Regelung gebildet. Dieser Ist-Wert wird mit dem programmierten Temperaturverlauf (Sollwert) verglichen und dann der Halogenstrahler ein- bzw. ausgeschaltet. Die Hysterese wird sehr klein mit 0,1°C gewählt.

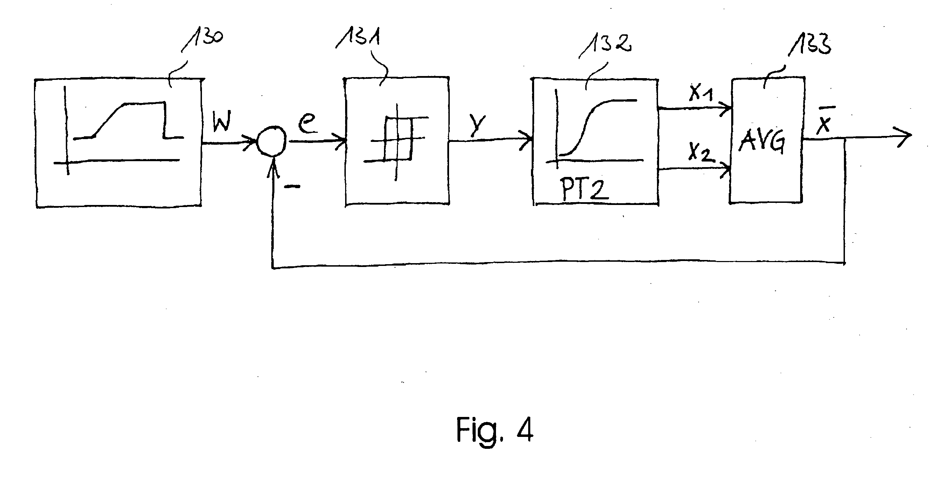

Das Blockschaltbild der Regelung ist in der Fig. 4 gezeigt. Die ersten beiden Komponenten 130, 131 bis zum Ausgang y (die Stellgröße) umfassen die Regeleinrichtung 110. Die dritte Komponente 132 umfasst die Regelstrecke, die mit der Stellgröße y beaufschlagt wird, und die Vorrichtung der Fig. 2 beinhaltet. Die Regelstrecke liefert die Regelgrößen x1 und x2 (Messwerte der Temperatursensoren 111, 112), die in der letzten Komponente 133 einer Mittelwertbildung unterzogen werden. Der Mittelwert wird dann zurückgemeldet und die Regeldifferenz e ermittelt.

Die Fig. 5 zeigt einen dreiphasigen Verlauf der Brutzellentemperatur.

Zu Beginn werden die mit Milben befallenen Brutwaben in den Rähmchen aus dem Bienenstock herausgenommen und die darauf sitzenden Bienen händisch abgeschüttelt oder abgestreift. Die bienenfreien Brutwaben werden anschließend in einen Bienenzargenturm wie in der Fig. 2 gezeigt eingehängt.

Die Wärmebehandlung gliedert sich in drei Phasen: Eine Vorbereitungsphase (a), eine Aufheizphase (b) und eine Behandlungsphase (c). Alle angegebenen Temperaturwerte verstehen sich als in der Brutzelle gemessene Werte.

Die Vorbereitungsphase (a) dauert ca. 20 min, um eine gleichmäßige Durchwärmung der Brutzellen als definierten Ausgangszustand (32-33°C) zu gestatten.

Dann beginnt die Aufheizphase (b) durch langsames Aufheizen auf ein Temperaturband von mindestens 39°C und maximal 40,5°C. Die Aufheizphase (b) dauert ca. 60 Minuten, wobei die Geschwindigkeit des Erwärmens der Brutzellen 0.1°C/Minute nicht überschreiten soll. Sollte nur einer der Temperatursensoren 111, 112 eine Temperatur von 40,5 Grad messen wird die Wärmequelle 101 sofort abgeschaltet.

Die Behandlungsphase (c) bei einer Haltetemperatur von mind. 39°C aber maximal 40,5°C erstreckt sich über eine Zeit von zumindest 45 Minuten.

Nach der Behandlungsphase (c) regelt das Gerät auf die anfänglichen 32-33°C zurück. Dieser Temperaturbereich stellt auch die Normaltemperatur in einer Brutzelle dar. Die Bienenbrut kann aber auch sofort nach dem Ende der Behandlungsphase (c) entnommen und in den Bienenstock zurückgegeben werden. Die Regelung überwacht nur ein "Vergessen" und damit die Gefahr der Unterkühlung.

Das gezeigte Beispiel ist nur eines unter vielen und soll nicht als einschränkend ausgelegt werden.

## Patentansprüche

1. Vorrichtung (100) zum Bekämpfen von bienenschädlichen Milben durch Wärmeeinwirkung mittels eines Warmluftstroms in ein Brutzellen enthaltendes Behältnis, wobei die Vorrichtung (100) eine Wärmequelle (101) und eine Luftführung (102) zum Erzeugen des Warmluftstroms aufweist und der Vorrichtung (100) eine Temperaturregeleinrichtung (110) zum Regeln der Lufttemperatur des Warmluftstroms mit zumindest einem Temperaturmessmittel (111, 112) zugeordnet ist, und die Vorrichtung (100) weiters eine Befeuchtungseinrichtung (104, 109, 103) zum Befeuchten des Warmluftstroms aufweist,
**dadurch gekennzeichnet, dass**
das zumindest eine Temperaturmessmittel (111, 112) zum Messen der Brutzellentemperatur eingerichtet ist, wobei ein der Brutzellentemperatur entsprechendes Signal der Temperaturregeleinrichtung (110) zugeführt ist, welche die Brutzellentemperatur über die Lufttemperatur des Warmluftstroms auf einen vorgebbaren Wert regelt.

2. Vorrichtung nach Anspruch 1, **dadurch gekennzeichnet, dass** das Temperaturmessmittel (111,112) in zumindest eine der Brutzellen (114) hineinragt.

3. Vorrichtung nach Anspruch 1, **dadurch gekennzeichnet, dass** das Temperaturmessmittel an einer von außen zugänglichen, vorzugsweise verdeckelten Oberfläche einer Brutzelle angeordnet ist.

4. Vorrichtung nach einem der Ansprüche 1 bis 3, **gekennzeichnet durch** eine Feuchtigkeitsregeleinrichtung (110) zum Regeln des Befeuchtens **durch** das Befeuchtungsmittel (103), wobei die Feuchtigkeitsregeleinrichtung (110) ein Feuchtigkeitsmessmittel (113) zum Messen der relativen Luftfeuchtigkeit des Warmluftstroms aufweist.

5. Vorrichtung nach einem der Ansprüche 1 bis 4, **dadurch gekennzeichnet, dass** die Befeuchtungseinrichtung einen Ultraschallzerstäuber (103) umfasst.

## Claims

1. A device (100) for combatting mites harmful to bees by the action of heat by way of a warm air flow into a receptacle containing brood cells, the device (100) comprising a heat source (101) and an air guidance system (102) for generating the warm air flow, and the device (100) being associated with a temperature control unit (110) for controlling the air temperature of the warm air flow, the unit comprising at least one temperature measuring means (111, 112), and the device (100) further comprising a humidifier (104, 109, 103) for humidifying the warm air flow,
**characterized in that**
the at least one temperature measuring means (111, 112) is configured to measure the brood cell temperature, wherein a signal corresponding to the brood cell temperature is supplied to the temperature control unit (110), which adjusts the brood cell temperature to a predefinable value by way of the air temperature of the warm air flow.

2. The device according to claim 1, **characterized in that** the temperature measuring means (111, 112) extends into at least one of the brood cells (114).

3. The device according to claim 1, **characterized in that** the temperature measuring means is disposed on a, preferably covered, surface of a brood cell that can be accessed from the outside.

4. The device according to any one of claims 1 to 3, **characterized by** a moisture control unit (110) for controlling the humidification by the humidifier (103), wherein the moisture control unit (110) comprises a moisture measuring means (113) for measuring the relative humidity of the warm air flow.

5. The device according to any one of claims 1 to 4, **characterized in that** the humidifier comprises an ultrasonic vaporizer (103).

## Revendications

1. Dispositif (100) servant à lutter contre des acariens attaquant les abeilles sous l'effet de la chaleur au moyen d'un flux d'air chaud dans un récipient contenant des cellules de couvain, sachant que le dispositif (100) présente une source de chaleur (101) et un guidage d'air (102) servant à générer le flux d'air chaud et qu'est associé au dispositif (100) un système de régulation de température (110) destiné à réguler la température de l'air du flux d'air chaud avec au moins un moyen de mesure de température (111, 112), et sachant que le dispositif (100) présente en outre un système d'humidification (104, 109, 103) servant à humidifier le flux d'air chaud,
**caractérisé en ce**
**que** le moyen de mesure de température (111, 112) au moins au nombre de un est mis au point pour mesurer la température des cellules de couvain, sachant qu'un signal correspondant à la température des cellules de couvain est amené au système de régulation de température (110), lequel régule la température des cellules de couvain à une valeur pouvant être prédéfinie au-dessus de la température de l'air du flux d'air chaud.

2. Dispositif selon la revendication 1, **caractérisé en ce que** le moyen de mesure de température (111, 112) fait saillie à l'intérieur d'au moins une des cellules de couvain (114).

3. Dispositif selon la revendication 1, **caractérisé en ce que** le moyen de mesure de température est disposé au niveau d'une surface, accessible de l'extérieur, de préférence operculée, d'une cellule de couvain.

4. Dispositif selon l'une quelconque des revendications 1 à 3, **caractérisé par** un système de régulation d'humidité (110) servant à réguler l'humidification par le moyen d'humidification (103), sachant que le système de régulation d'humidité (110) présente un moyen de mesure d'humidité (113) servant à mesure l'humidité relative de l'air du flux d'air chaud.

5. Dispositif selon l'une quelconque des revendications 1 à 4, **caractérisé en ce que** le système d'humidification comprend un vaporisateur à ultrasons (103).
